# EUROPÄISCHE PATENTSCHRIFT

(11) **EP 1 650 534 B1**
(45) Veröffentlichungstag und Bekanntmachung des Hinweises auf die Patenterteilung: **02.11.2011**
(21) Anmeldenummer: 05019389.5
(22) Anmeldetag: 07.09.2005
(51) Int. Cl.: G01C 23/00, G01S 17/89

(54) **Verfahren zur Pilotenunterstützung bei Landungen von Helikoptern im Sichtflug unter Brown-Out oder White-Out Bedingungen**
Method for supporting helicopter pilots by visual landing under Brown-Out or White-Out conditions
Procédé pour soutenir les pilotes d'hélicoptère pendant l'atterrissage visuel dans des conditions Brown-Out ou White-Out

(30) Priorität: 23.10.2004 DE 102004051625
(43) Veröffentlichungstag der Anmeldung: 26.04.2006
(73) Patentinhaber: EADS Deutschland GmbH, 85521 Ottobrunn (DE)
(72) Erfinder: Scherbarth, Stefan, Dr., 88677 Markdorf (DE)
(74) Vertreter: Meel, Thomas

(56) Entgegenhaltungen:
- EP-A- 0 911 647
- WO-A-02/45048
- US-A- 5 296 854
- US-A1- 2004 183 697
- US-B1- 6 216 065
- P. DONALDSON: "Brown-Out Survival - Technology or Training" DEFENCE HELICOPTER, März 2004 (2004-03), Seiten 10-12, XP009057682

## Beschreibung

Die Erfindung betrifft ein Verfahren zur Pilotenunterstützung bei Landungen von Helikoptern im Sichtflug unter Brown-Out oder White-Out Bedingungen.

Bei Landeanflügen von Hubschraubern auf ein staubiges bzw. schneebedecktes Landefeld tritt in der Endphase eine plötzliche starke Sichteinschränkung durch den aufgewirbelten Staub bzw. Schnee auf. Dieses Brown-Out bzw. White-Out genannte Phänomen stellt bei Landungen unter Sichtflug (VFR) ein erhebliches Gefahrenpotential dar. Der Pilot verliert die Orientierung über seine Fluglage und Flughöhe zum Boden; der herumwirbelnde Staub bzw. Schnee täuscht ihm eine Schräglage oder ein Abkippen des Hubschraubers vor. Dies führt immer wieder zu Unfällen und stellt derzeit die überwiegende Einzelursache aller Helikopterunfälle dar.

Der Artikel "Brown-Out survival - technology or training?" in der Zeitschrift "Defence Helicopter", Verlag Shepard, Seiten 10-12, Ausgabe Februar/März 2004 gibt eine instruktive Einführung in die Problematik des Brown- Out bzw. White-Out und zeigt erste technische Lösungsansätze auf, die auch im folgenden kurz gewürdigt werden.

Nach derzeitigem Stand der Technik steht dem Piloten in entsprechend ausgerüsteten Hubschraubern die Instrumente für Instrumentenflugbedingungen zur Verfügung. Hiermit kann bei Auftreten von Brown-Out bzw. White-Out Bedingungen nach den Regeln des Instrumentenflugs unter Orientierung z.B. am künstlichen Horizont und dem Radarhöhenmesser gelandet werden. Problematisch hierbei ist jedoch, dass in der kritischen Phase kurz vor der Ladung plötzlich eine vollständiges Umschalten von der Orientierung an Hand der natürlichen Außensicht auf die Orientierung an Hand von abstrakter Instrumenteninformation erfolgen muss. Dies erfordert ständige Schulung der Piloten auf diese kritische Situation und führt dennoch immer wieder zu Unfällen.

Auch sind Vorschläge bekannt, welche mit GPS-gestützter Sensorik versuchen, den Piloten Hilfsinformationen zu bieten. Hierdurch wird zwar der Aufwand der vollen Instrumentenflug-Instrumentierung vermieden, an dem prinzipiellen Problem der erforderlichen Umstellung von einer Orientierung nach Sicht auf eine Orientierung nach Instrumenten ändert sich jedoch hierdurch nichts.

Auch wurde vorgeschlagen, mit Hilfe von Radar durch den Staub bzw. Schnee den Landeplatz zu detektieren. Dies scheitert für die derzeit verfügbaren Radare and der zu geringen Auflösung und auch der Mindestdetektionsentfernung. Auch sind Kosten und Gewicht eines Radares erheblich. Das in DE 43 28 573 C2 vorgeschlagene ROSAR-System könnte prinzipiell den Staub bzw. Schnee unter Brown-Out bzw. White-Out Bedingungen durchdringen und über die dort vorgeschlagene bildhafte Darstellung der momentanen Radarechos ein Unterstützung für den Piloten leisten. Ein derartiges Radar stellt jedoch einen erheblichen Aufwand kostenmäßig wie auch hinsichtlich des Gewichtes eines solchen Systems dar, so dass derzeit noch kein ROSAR-System auf dem Markt verfügbar ist.

In der WO 02/450048 A1 ist ein Navigations- und Landeverfahren für Flugzeuge und Helikopter beschrieben, mit dem dem Piloten unter Rückgriff auf eine an Bord vorliegende Geländedatenbank sowie eine Hindemisdatenbank fortlaufend eine virtuelle Außensicht erzeugt wird. Die Hindernisdatenbank wird durch eine drahtlose Verbindung zu einer Bodenstation während des Flugs aktualisiert. Dieses Verfahren ist somit auf mit entsprechender Infrastruktur ausgerüstete Landeplätze beschränkt und ist daher nicht geeignet, dass gerade bei Aussenlandungen auf unpräpariertem Terrain auftretende Brown-Out bzw. White-Out Problem zu lösen.

Die EP 0 911 647 A2 beschreibt ein Flugsystem, das dem Piloten eines Luftfahrzeugs ebenfalls eine virtuelle Außensicht ermöglicht. Dazu greift es auf eine Datenbank zu, die abhängig von der Auflösung der darin gespeicherten Daten in drei Speicher gegliedert ist, nämlich weiträumige topographische Daten, engräumige topographische Daten und Hindernissdaten wie z.B. Position und Höhe von Stromleitungen, hohen Gebäuden etc. Die Datenbank wird während des Flugs mittels verschiedener 3-D-Sensoren aktualisiert. Bei gutem Wetter werden engräumige Daten der Umgebung erzeugt, bei schlechtem Wetter wird davon ausgegangen dass mit den 3-D-Sensoren zumindest noch die Hindemisdaten erzeugt werden können.

Weiterhin ist das Verfahren gemäß EP 0 911 647 A2 **dadurch gekennzeichnet, dass** die Generierung der virtuellen Sicht aus reduzierten, abstrakten topographischen Daten bzw. Hindernisdaten erstellt wird.

Der Erfindung liegt die Aufgabe zu Grunde, dem Piloten eine zuverlässige Flugunterstützung für Sichtflug-Landungen unter Brown-Out- bzw. White-Out-Bedingungen zu geben.

Diese Aufgabe wird mit dem Verfahren gemäß Patentanspruch 1 gelöst. Vorteilhafte Ausgestaltungen der Erfindung sind Gegenstand von Unteransprüchen.

Gemäß der Erfindung wird der Hubschrauber mit einem nach vorne schauenden 3-D-Sensor höherer Auflösung sowie einem Lagereferenzsystem ausgestattet. Der 3-D-Sensor weist eine Auflösung von mindestens 0,5° und eine Datenrate > ca. 20.000 Pixel /s auf. Der 3-D Sensor nimmt während des Anfluges auf dem Landeplatz diesen fortlaufend auf. Aus den akkumulierten 3-D-Daten wird mit Hilfe der Fluglage- und Positionsdaten des Lagereferenzsystems des Helikopters eine natürlich virtuelle Sicht des Landeplatzes generiert, und zwar in einer Perspektive, die der aktuellen Lage und Position des Helikopters entspricht. Diese virtuelle Außensicht wird dem Piloten mittels einer Anzeigevorrichtung (Bildschirm, Head-Up-Display etc) zur Verfügung gestellt.

Mittels einer Kontrollroutine wird außerdem sichergestellt, das 3-D-Daten, die während einer Brown-Out- oder White-Out-Bedingung erzeugt worden sind, nicht in die Berechnung der virtuellen Außensicht eingehen. Eine erste mögliche Ausführung hierfür besteht darin, die eingehenden Daten zu analysieren, um damit eine Brown-Out- oder White-Out-Bedingung direkt zu detektieren.
Derzeitige höher auflösende 3-D Sensoren sind nur als VFR-Sensoren geeignet, das heißt, sie sind nicht in der Lage, bei auftretendem Brown-Out bzw. White-Out diesen zu durchdringen. Daher wird im Moment des Brown-Out bzw. White-Out dieser an Hand der Sensordaten durch eine Bildauswertung automatisch an Hand der 3-D-Abbildung der Staubwolke erkannt. Dem Piloten wird dann während des Brown-Out weiterhin die virtuelle Sicht auf Basis der vor dem Brown-Out bzw. White-Out gewonnenen 3-D- Daten zur Verfügung gestellt, wobei die Perspektive an Hand der Lagereferenzdaten weiter ständig an die aktuelle Hubschrauberposition und -lage angepasst wird.

Um sicherzustellen, dass während einer Brown-Out- oder White-Out-Bedingung erzeugte 3-D-Daten nicht in die Berechnung der virtuellen Außensicht eingehen, kann alternativ zu der oben beschriebenen direkten Detektion einer Brown-Out- oder White-Out-Bedingung auch vorgesehen werden, nur solche 3-D-Daten zu verwenden, die beim Anflug oberhalb einer bestimmten, vorgegebenen Mindestflughöhe generiert wurden. Diese Mindestflughöhe wird so gewählt, dass oberhalb dieser Mindestflughöhe eine Brown-Out- oder White-Out-Bedingung noch sicher ausgeschlossen werden kann. Ein typischer Wert ist dabei ca. 10 - 15m. Die Höhenmessung kann insbesondere mit einem Radarhöhenmesser durchgeführt werden. Dem Piloten wird unterhalb der Mindestflughöhe weiterhin die virtuelle Außensicht auf Basis der oberhalb der Mindestflughöhe gewonnenen 3-D-Daten zur Verfügung gestellt, wobei die Perspektive an Hand der Lagereferenzdaten weiter ständig an die aktuelle Hubschrauberposition und -lage angepasst wird.

Die virtuelle Außensicht sollte möglichst schnell an die Flugbewegungen des Helikopters angepasst werden. Eine Wiederholrate von mindestens 20 Hz ist dabei ausreichend.

Der Pilot hat somit während der gesamten Landephase eine hochauflösende natürlich wirkende virtuelle Außensicht zur Verfügung. Da die Daten der 3-D-Sensorik während des Anfluges akkumuliert werden und hierbei auf Grund der Flugbewegung immer wieder andere Raumpunkte erfasst werden, lässt sich eine Auflösung in Videoqualität erreichen. So ergibt beispielsweise ein Anflug über 10s mit einer Datenrate größer als 20.000 Pixeln/s mehr als 200.000 Pixel. Da die Perspektive jederzeit der aktuellen Hubschrauberposition und -lage entspricht, kann der Pilot an Hand dieser virtuellen Sicht jederzeit die Lage des Hubschraubers relativ zum Landeplatz einschätzen. Bei Eintritt der Brown-Out bzw. White-Out Bedingung kann er ohne kritische Umstellung an Hand dieser virtuellen Sicht seine Landung beenden. Da Brown-Out bzw. White-Out lediglich in ca. 3-5 m über dem Boden auftritt, ist die Erzeugung der virtuellen Sicht aus Daten vor dem Eintreten dieser Sichteinschränkung ausreichend, da in der Regel nicht zu erwarten ist, dass innerhalb dieser letzten ca. 3 Sekunden noch Hindernisse an der Landestelle auftauchen. Eine - derzeit nicht verfügbare - hochauflösende, den Staub bzw. Schnee durchdringende Sensorik ist daher nicht erforderlich.

Als 3-D Sensor wird ein entfernungsbildgebender Sensor, insbesondere ein abbildendes Laserradar eingesetzt, wie es z.B. in der DE 39 42 770 C2 oder DE 43 20 485 A1 beschrieben ist. Als 3-D-Sensor kann beispielsweise des Helikopter-LaserRadar HELLAS von EADS Deutschland GmbH, Ottobrunn eingesetzt werden, welches 40.000 Pixel /s bei einer für diese Anwendung bei weitem ausreichende Reichweite von bis zu 1 km bereitstellt.

Die Erzeugung der 3-D-Daten kann jedoch alternativ auch auf andere an sich bekannte Weise erfolgen. Zum Beispiel kann hierfür eine Stereokamera verwendet werden.

Für das erforderliche Lagereferenzsystem sind eine Vielzahl geeigneter Geräte am Markt verfügbar. Als Beispiel sei das Inertialnavigationssystem AH2100 der Firma Honeywell genannt. In einer besonders vorteilhaften Ausführung verwendet das Lagereferenzsystem zur Berechnung der Lage- und Positionsdaten neben weiteren Sensorikdaten auch die 3-D-Daten des 3-D Sensors selbst.

Die erforderliche Umsetzung der 3-D-Daten in eine photorealistisch gerenderte Darstellung aus der Perspektive des Helikopter-Piloten ist mit Standardverfahren der modernen 3-D-Visualisierungstechnik problemlos und kostengünstig möglich Als 3-D-Schnittstelle zum Rendern einer 3-D-Graphik können insbesondere die Standards von OpenGL und DirectX eingesetzt werden.

Um eine möglichst realistische Darstellung der gerenderten Szene zu erreichen, können vorteilhaft die folgenden Maßnahmen ergriffen werden:
- Durch eine Farbvideokamera wird neben den 3-D-Daten die Farb- und Grauwertverteilung des Landeplatzes aufgenommen. Somit wird es möglich, die virtuelle Außensicht in Annäherung an der tatsächlichen Farbe und Grauwertverteilung des Landeplatzes zu erzeugen.
- Zur Unterstützung der Szenenwahrnehmung kann in die gerenderte Szene eine Sonnenbeleuchtung mit Schattenwurf entsprechend dem aus Position und Uhrzeit bekanntem Sonnenstand simuliert werden.

Auf des Basis kosten- und gewichtsgünstig verfügbarer Sensoren wird mit der Erfindung insgesamt eine zuverlässige Pilotenunterstützung für VFR-Landungen unter Brown-Out oder White-Out-Bedingungen realisiert.

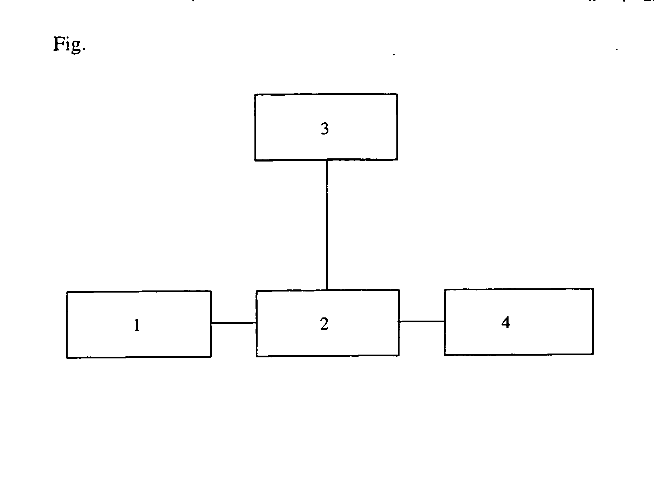

Der prinzipielle Systemaufbau ist in Fig. 1 erläutert.

Fig. 1 zeigt schematisch die wesentlichen Komponenten einer Ausführung des erfindungsgemäßen Systems zur Helikopter-Landehilfe.
Der 3-D-Sensor 1 ist vorwärts schauend so am Hubschrauber installiert, dass das zur Landung vorgesehene Landefeld beim Landeanflug im Blick ist. Der 3-D Sensor liefert seine Daten an den Bildprozessor 2 welcher vom Lagereferenzsystem 3 fortlaufend die Position und Lage des Hubschraubers erhält. Aus den über mehreren Sekunden akkumulierten 3-D-Sensordaten und in Verbindung mit den Positions- und Lagedaten wird vom Bildprozessor zunächst eine hochauflösene 3-D-Representation des Landeplatzes erzeugt. Hieraus erzeugt dann der Bildprozessor 2 fortlaufend die virtuelle Sicht aus der Perspektive des Piloten, welche über das Display 4, welches ein Standard Multifunktiondisplay oder ein Head up Display sein kann, dargestellt wird. Der Bildprozesssor 2 ist in der Lage, auftretende Brown-Out oder White-Out-Bedingungen anhand der 3-D-Daten ohne größeren Auswerteaufwand zu erkennen. Die unter Brown-Out oder White-Out-Bedingungen erzeugten 3-D-Daten werden für die Erzeugung der virtuellen Sicht des Landeplatzes nicht verwendet.

## Patentansprüche

1. Verfahren zur Pilotenunterstützung bei Landungen von Helikoptern im Sichtflug unter Brown-Out oder White-Out Bedingungen, **dadurch gekennzeichnet, dass** während des Landeanfluges 3-D-Daten des vorgesehenen Landeplatzes durch einen an Bord des Helikopters befindlichen 3-D-Sensor mit einer Auflösung von mindestens 0,5° und einer Datenrate größer als 20.000 Pixeln/s erzeugt werden, diese mit Hilfe der Positions- und Lagedaten des Helikopters zu einer 3-D-Repräsentation des Landeplatz akkumuliert werden, aus dieser 3-D-Repräsentation in der der aktuellen Position und Lage des Hubschraubers entsprechenden Perspektive fortlaufend eine virtuelle Außensicht erstellt wird, welche dem Piloten angezeigt wird, wobei eine Kontrollroutine vorhanden ist, mit der sichergestellt wird, dass keine 3-D-Daten des vorgesehenen Landeplatzes, die unter Brown-Out oder White-Out-Bedingungen erzeugt wurden, bei der Akkumulation der 3-D-Repräsentation berücksichtigt werden.

2. Verfahren nach Anspruch 1, **dadurch gekennzeichnet, dass** die Kontrollroutine derart ausgestaltet ist, dass einlaufende 3-D-Daten analysiert werden, um eine Brown-Out-Bedingung oder eine White-Out-Bedingung zu erkennen, wobei 3-D-Daten, die ab dem Zeitpunkt des Erkennens einer Brown-Out-Bedingung oder White-Out-Bedingung erzeugt werden, bei der Akkumulation der 3-D-Repräsentation nicht berücksichtigt werden.

3. Verfahren nach Anspruch 1, **dadurch gekennzeichnet, dass** die Kontrollroutine derart ausgestaltet ist, dass fortlaufend die Höhe des Helikopters über Grund gemessen wird, wobei 3-D-Daten, die unterhalb einer vorgegebenen Mindesthöhe generiert werden, bei der Akkumulation der 3-D-Repräsentation nicht berücksichtigt werden.

4. Verfahren nach einem der vorangehenden Ansprüche, **dadurch gekennzeichnet, dass** das Lagereferenzsystem zur Berechnung der Lage- und Positionsdaten auch die generierten 3-D-Daten verwendet.

5. Verfahren nach einem der vorangehenden Ansprüche, **dadurch gekennzeichnet, dass** die virtuelle Außensicht photorealistisch gerendert ist.

6. Verfahren nach Anspruch 5, **dadurch gekennzeichnet, dass** während des Anfluges durch eine Farbvideokamera die Farb- und Grauwertverteilung des Landeplatzes aufgenommen wird, und die virtuelle Außensicht in Annäherung an der tatsächlichen Farbe und Grauwertverteilung erzeugt wird.

7. Verfahren nach Anspruch 5 oder 6, **dadurch gekennzeichnet, dass** zur Unterstützung der Szenenwahrnehmung in die gerenderte Szene eine Sonnenbeleuchtung mit Schattenwurf entsprechend dem aus Position und Uhrzeit bekanntem Sonnenstand simuliert wird.

8. Verfahren nach einem der vorangehenden Ansprüche, **dadurch gekennzeichnet, dass** zur Generierung der 3-D-Daten ein 3-D-Sensor mit einer Auflösung von mindestens 0,5° und einer Datenrate größer als 20.000 Pixel /s eingesetzt wird.

9. Verfahren nach einem der vorangehenden Ansprüche, **dadurch gekennzeichnet, dass** die virtuelle Außensicht auf einem Bildschirm-Display oder einem Head-Up-Display dargestellt wird.

10. Verfahren nach einem der vorangehenden Ansprüche, **dadurch gekennzeichnet, dass** die 3-D-Daten zur Erzeugung einer 3-D Repräsentation des Landeplatzes über eine Zeitdauer länger als 1 Sekunde akkumuliert werden.

11. Verfahren nach einer der vorangehenden Ansprüche, **dadurch gekennzeichnet, dass** die virtuelle Außensicht mit einer Wiederholrate von mindestens 20 Hz generiert wird.

## Claims

1. Method for pilot assistance when landing helicopters in visual flight in brown-out or white-out conditions, **characterized in that**, during the landing approach, 3D data relating to the intended landing site is produced by means of a 3D sensor, which is located on board the helicopter, with a resolution of at least 0.5° and a data rate of more than 20 000 pixels/s, this data is accumulated with the aid of the position and attitude data of the helicopter to form a 3D representation of the landing site, a virtual external view is created continuously from this 3D representation in the perspective which corresponds to the current position and attitude of the helicopter, and this virtual external view is displayed to the pilot, with a monitoring routine being provided which ensures that no 3D data which relates to the intended landing site and has been produced in brown-out or white-out conditions is taken into account in the accumulation of the 3D representation.

2. Method according to Claim 1, **characterized in that** the monitoring routine is designed such that the incoming 3D data is analysed in order to identify a brown-out condition or a white-out condition, with 3D data which is produced after the time of identification of a brown-out condition or a white-out condition not being taken into account in the accumulation of the 3D representation.

3. Method according to Claim 1, **characterized in that** the monitoring routine is designed such that the height of the helicopter above ground is measured continuously, with 3D data which is generated below a predetermined minimum height not being taken into account in the accumulation of the 3D representation.

4. Method according to one of the preceding claims, **characterized in that** the attitude reference system for calculation of the attitude and position data also uses the generated 3D data.

5. Method according to one of the preceding claims, **characterized in that** the virtual external view is rendered photo-realistically.

6. Method according to Claim 5, **characterized in that** the colour and grey-scale distribution of the landing site is recorded by a colour video camera during the approach, and the virtual external view is produced in an approximation to the actual colour and grey-scale distribution.

7. Method according to Claim 5 or 6, **characterized in that** sunlight with shadows thrown corresponding to the position of the sun as known from the position and real time is simulated in the rendered scene in order to assist scene perception.

8. Method according to one of the preceding claims, **characterized in that in that** the 3D data is generated using a 3D sensor with a resolution of at least 0.5° and a data rate of more than 20 000 pixels/s.

9. Method according to one of the preceding claims, **characterized in that** the virtual external view is displayed on a screen display or a head-up display.

10. Method according to one of the preceding claims, **characterized in that in that** the 3D data for production of a 3D representation of the landing site is accumulated over a time period of more than 1 second.

11. Method according to one of the preceding claims, **characterized in that** the virtual external view is generated at a repetition rate of at least 20 Hz.

## Revendications

1. Procédé pour assister les pilotes d'hélicoptère pendant l'atterrissage visuel dans des conditions de Brown-out ou de White-Out, **caractérisé en ce que** pendant l'approche du sol, on génère des données 3D de l'aire d'atterrissage prévue au moyen d'un capteur 3D se trouvant à bord de l'hélicoptère avec une résolution d'au moins 0,5° et un débit supérieur à 20 000 Pixels/s, on les accumule pour une représentation 3D de l'aire d'atterrissage à l'aide des données de position et de situation de l'hélicoptère, à partir de cette représentation 3D dans laquelle la perspective correspond à la position et la situation actuelle de l'hélicoptère, on élabore en permanence une vue extérieure virtuelle qui est affichée au pilote, dans lequel on dispose d'une routine de contrôle permettant de s'assurer que lors de l'accumulation de la représentation en 3D, on ne tient compte d'aucune donnée 3D de l'aire d'atterrissage prévue ayant été générée dans des conditions de Brown-out ou de White-Out.

2. Procédé selon la revendication 1, **caractérisé en ce que** la routine de contrôle est arrangée de manière à analyser les données 3D entrantes pour identifier une condition de Brown-out ou une condition de White-Out, dans laquelle on ne tient pas compte des données 3D générées lors de l'accumulation de la représentation en 3D à partir du moment de l'identification d'une condition de Brown-out ou d'une condition de White-Out.

3. Procédé selon la revendication 1, **caractérisé en ce que** la routine de contrôle est arrangée de manière à mesurer en permanence l'altitude de l'hélicoptère au dessus du sol, dans lequel on ne tient pas compte des données 3D générées lors de l'accumulation de la représentation en 3D, situées au dessous d'une altitude minimum prédéfinie.

4. Procédé selon une des revendications précédentes, **caractérisé en ce que** le système de référence de situation utilise également les données 3D générées pour le calcul des données de situation et de position.

5. Procédé selon une des revendications précédentes, **caractérisé en ce que** la vue extérieure virtuelle est rendue photo-réaliste.

6. Procédé selon la revendication 5, **caractérisé en ce que** pendant l'approche, on enregistre la répartition des valeurs de couleurs et de gris de l'aire d'atterrissage à l'aide d'une caméra vidéo couleurs et on génère la vue extérieure virtuelle de manière proche de la répartition réelle des valeurs de couleurs et de gris.

7. Procédé selon la revendication 5 ou 6, **caractérisé en ce que** pour assister la perception de la scène, on simule dans la scène restituée, un éclairage solaire avec projection des ombres correspondant à celui du soleil connu à partir de la position et de l'heure.

8. Procédé selon une des revendications précédentes, **caractérisé en ce que** pour la génération des données 3D, on met en oeuvre un capteur 3D avec une résolution d'au moins 0,5° et un débit supérieur à 20 000 Pixels/s.

9. Procédé selon une des revendications précédentes, **caractérisé en ce qu'**on représente la vue extérieure virtuelle sur un écran d'affichage ou un affichage à tête haute.

10. Procédé selon une des revendications précédentes, **caractérisé en ce que** pour la génération d'une représentation 3D de l'aire d'atterrissage, on accumule les données 3D pendant une durée supérieure à 1 seconde.

11. Procédé selon une des revendications précédentes, **caractérisé en ce qu'**on génère la vue extérieure virtuelle avec un taux de répétition d'au moins 20 Hz.
